# EUROPÄISCHE PATENTSCHRIFT

(11) **EP 3 976 940 B1**
(45) Veröffentlichungstag und Bekanntmachung des Hinweises auf die Patenterteilung: **20.12.2023**
(21) Anmeldenummer: 20739880.1
(22) Anmeldetag: 25.06.2020
(51) Int. Cl.: F01K 9/00, F01K 25/10

(54) **SYSTEM ZUR UMWANDLUNG VON THERMISCHER ENERGIE IN MECHANISCHER ENERGIE**
SYSTEM FOR CONVERTING THERMAL ENERGY INTO MECHANICAL WORK
SYSTÈME DE CONVERSION D'ÉNERGIE THERMIQUE EN ÉNERGIE MÉCANIQUE

(30) Priorität: 19.07.2019 DE 102019210680
(43) Veröffentlichungstag der Anmeldung: 06.04.2022
(73) Patentinhaber: Siemens Energy Global GmbH & Co. KG, 81739 München (DE)
(72) Erfinder: GLOS, Stefan, 45657 Recklinghausen (DE); GROTKAMP, Stefanie, 45478 Mülheim (DE); SUDHOFF, Robin, 45147 Essen (DE); WECHSUNG, Michael, 45470 Mülheim an der Ruhr (DE)
(86) Internationale Anmeldenummer: PCT/EP2020/067830
(87) Internationale Veröffentlichungsnummer: WO 2021/013465

(56) Entgegenhaltungen:
- DE-A1-102012 009 459
- US-A1- 2010 154 421
- US-A1- 2013 025 277
- US-A1- 2013 067 910
- US-B1- 9 803 626

## Beschreibung

Die Erfindung betrifft ein System umfassend eine Pumpe zum Befördern eines Strömungsmediums, eine Anordnung zum Umwandeln des Strömungsmediums von einem flüssigen in einen gasförmigen Zustand, eine Strömungsmaschine zum Umwandeln der thermischen Energie des Strömungsmediums in mechanische Energie, einen Kondensator zum Kondensieren des gasförmigen Strömungsmediums in einen flüssigen Zustand.

Wärmekraftprozesse können geschlossen ausgeführt werden. Ein Beispiel für einen geschlossenen Wärmekraftprozess ist ein Wasser-Dampf-Kreislauf in einem Kraftwerk zur Erzeugung von elektrischer Energie. Dabei wird Wasser bzw. Dampf als Wärmeträger und Arbeitsmedium verwendet. Solche Kreisprozesse sind unter der Bezeichnung Clausius Rankine Prozess bekannt.

Bei niedrigen Prozesstemperaturen werden diese Kreisprozesse auch mit organischen Strömungsmedien betrieben. Solche Kreisprozesse sind unter dem Begriff Organic Rankine Cycle bekannt.

Obwohl das Strömungsmedium in einem Organic Rankine Cycle streng genommen nicht reiner Wasserdampf ist, werden die in diesen Kreisprozessen zur Umwandlung der thermischen Energie in mechanische Energie verwendeten Strömungsmaschinen als Dampfturbinen bezeichnet. Eine andere Bezeichnung für eine mit CO₂ als Strömungsmedium betriebenen Strömungsmaschine wäre CO₂-Expander.

Ein weiteres Strömungsmedium das in einem Kreislauf eingesetzt werden kann, ist Kohlendioxid. Ein Vorteil von Kohlendioxid gegenüber Wasser ist, dass der kritische Punkt sich bei vergleichsweise niedrigem Druck- und Temperaturniveau befindet. Der kritische Punkt für Kohlendioxid liegt bei einem Druck von ca. 74 bar und einer Temperatur von ca. 31°C. Der kritische Punkt von Wasser liegt im Vergleich dazu bei einem Druck von ca. 221 bar und einer Temperatur von 385°C. Bei solchen Kreisläufen handelt es sich fast immer um überkritische Kreisläufe. Daher werden solche Kreisläufe auch superkritische Kohlendioxid-Kreisläufe oder sCO₂-Kreisläufe genannt (sCO₂ = supercritical CO₂). Obwohl auch hier das Strömungsmedium nicht Wasserdampf ist, spricht man bei der für die Umwandlung von thermischer Energie in mechanischer Energie eingesetzte Strömungsmaschine von einer Dampfturbine.

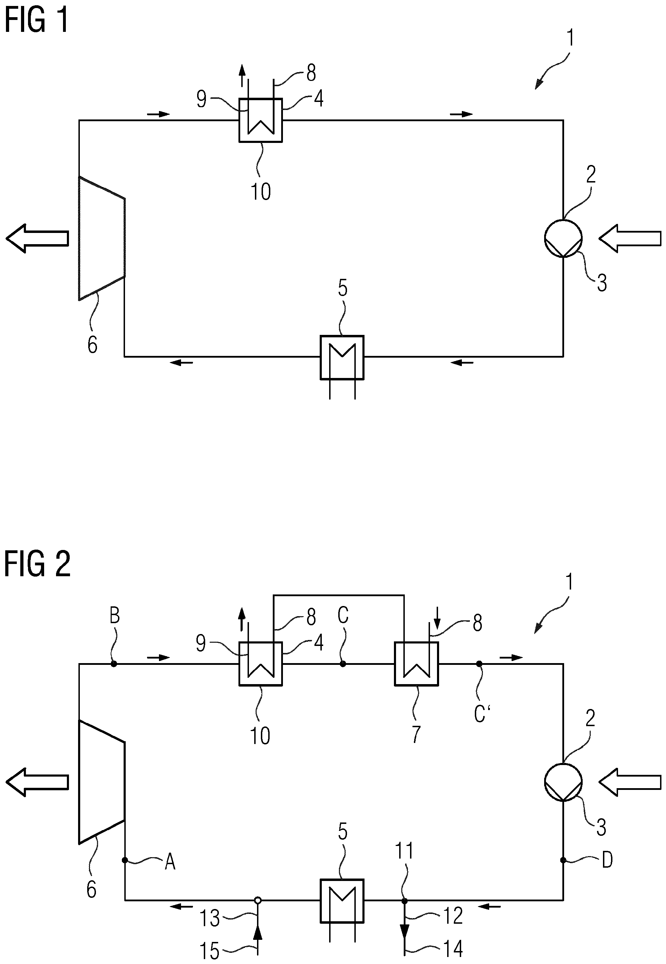

Die Figur 1 zeigt einen Kreislauf 1 gemäß dem Stand der Technik in einem CO₂-Kreiprozess. Vor dem Eintritt 2 in die Pumpe 3 wird das Strömungsmedium (CO₂) in einem Kondensator 4 vom gasförmigen Zustand in einen flüssigen Zustand umgewandelt. Die Pumpe 3 befördert das flüssige CO₂ zu einer Anordnung 5, die zur Umwandlung von flüssigem CO₂ in gasförmigem CO₂ ausgebildet ist. Dies erfolgt unter Verwendung von Brennstoffen, wie beispielsweise fossiler Brennstoffe oder auch durch die Verwendung von Erdwärme, was unter dem Begriff geothermisches Kraftwerk bekannt ist. Nach der Anordnung 5 strömt das gasförmige CO₂ zu einer Dampfturbine (6), die zur Umwandlung der thermischen Energie des CO₂ in mechanische Energie ausgebildet ist. Anschließend gelangt das abgekühlte CO₂ zu dem Kondensator 4 wodurch der Kreislauf geschlossen wird.

Ein wesentliches Merkmal von solchen sCO₂-Kreisläufen ist, dass die Verdichtung des Strömungsmediums im flüssigkeitsnahen Zustandsgebiet erfolgt. Das bedeutet, dass das Arbeitsmedium kompressible Eigenschaften aufweist. Im Gegensatz zu einem Clausius-Rankine-Prozess, bei dem Wasser als Strömungsmedium als inkompressibel bezeichnet werden kann. Dies führt dazu, dass der Verdichter bzw. die Pumpe vergleichsweise viel Kompressionsarbeit leisten muss.

Da Kompressionen bzw. Verdichtungen mit Verlusten verbunden sind, bedeutet dies, dass geringe Kompressionsarbeiten, wie in Wasserdampfkreislauf zu geringen Verlusten und große Kompressionsarbeiten, die in sCO₂-Kreisläufen zu großen Verlusten führen.

In der US 8,316,955 B2 wird eine Anwendung von sCO₂-Kreisläufen zur geothermischen Stromerzeugung offenbart. Das dort beschriebene System besitzt ein zusätzliches Wirkprinzip auf Grund der signifikanten Differenz der geodätischen Höhe. Die Wärmezufuhr findet im Erdreich statt und zwar in Tiefen von mehr als 730m und häufig in Tiefen von 2000m bis 5000m. Dabei unterscheidet sich die mittlere Dichte von "kalten" CO₂ (bei 10°C bis 40°C) entlang der Injektionsbohrung von der mittleren Dichte des warmen CO₂ (zwischen ca. 60°C und 260°C) deutlich. Auf Grund dieses Dichteunterschiedes entsteht ein Naturumlauf des Strömungsmediums, der auch als Thermosiphon-Effekt bezeichnet wird. Das Arbeitsmedium zirkuliert ohne Zugabe von mechanischer Arbeit. Die Entnahme der thermischen Energie aus der Erde kann mit einer Zirkulationspumpe beschleunigt werden.

Weitere Systeme zur Umsetzung von thermischer in mechanische Energie sind in der US 2013/067910 A1 und DE 10 2012 009459 A1 offenbart.

Auch für diese geothermischen Kreisläufe ist es wichtig, das kalte Strömungsmedium möglichst weit in Richtung Flüssigkeit abzukühlen, da dadurch die Dichte am Eintritt der Injektionsbohrung sowie die Kompressibilität des Strömungsmediums abnimmt bzw. die notwendige Kompressionsarbeit an deren Eintritt geringer wird. Der Thermosiphon-Effekt wird somit verstärkt.

Es ist Aufgabe der Erfindung, ein System mit einem sCO₂-Kreislauf zu verbessern.

Gelöst wird diese Aufgabe durch ein System umfassend eine Pumpe zum Befördern eines Strömungsmediums, wobei das Strömungsmedium Kohlendioxid ist, eine Anordnung zum Umwandeln des Strömungsmediums von einem flüssigen in einen gasförmigen Zustand, eine Strömungsmaschine zum Umwandeln der thermischen Energie des Strömungsmediums in mechanische Energie, einen Kondensator zum Kondensieren des gasförmigen Strömungsmediums in einen flüssigen Zustand, wobei das System eine Kühlungseinheit zum Abkühlen des flüssigen Strömungsmediums aufweist, wobei die Anordnung (5) ein Reservoir in einer geodätischen Erdschicht darstellt, wobei durch Erdwärme das im Reservoir angeordnete Kohlendioxid vom flüssigen in den gasförmigen Zustand umgewandelt wird.

Ferner wird die Aufgabe gelöst durch ein Verfahren zum Betreiben eines Systems, bei dem ein Strömungsmedium im flüssigen Zustand mit einer Pumpe zu einer Anordnung befördert wird, wobei in der Anordnung das Strömungsmedium vom flüssigen in einen gasförmigen Zustand umgewandelt wird, wobei das gasförmige Strömungsmedium in eine Strömungsmaschine geführt wird, wo die thermische Energie des Strömungsmediums in mechanische Energie umgewandelt wird, wobei nach der Strömungsmaschine das Strömungsmedium in einem Kondensator wieder in den flüssigen Zustand umgewandelt wird, wobei nach dem Kondensator die Temperatur des Strömungsmediums mit einer Kühlungseinheit verringert wird bevor das Strömungsmedium wieder zur Pumpe geführt wird, wobei das Strömungsmedium nach der Pumpe (3) in ein Reservoir in der Erde geleitet wird und durch Erdwärme derart erwärmt wird, dass das Strömungsmedium einen Phasendwchsel von flüssig nach gasförmig durchführt und anschließend das gasförmige Strömungsmedium aus der Erde zu Strömungsmaschine (6) geleitet wird.

Vorteilhafte Weiterbildungen sind in den Unteransprüchen angegeben.

Ein wesentliches Merkmal der Erfindung ist die Abkühlung des Strömungsmediums nach der Kondensation und vor Eintritt in die Pumpe. Mit anderen Worten: Das Strömungsmedium wird nach der Kondensation gezielt unterkühlt, wodurch sich die Dichte deutlich erhöht beziehungsweise die Kompressibilität deutlich verringert. Noch genauer formuliert: Das Strömungsmedium wird erfindungsgemäß vor der Pumpe beziehungsweise vor der ersten Kompressorstufe abgekühlt, mit dem Ziel die Verdichterarbeit zu minimieren. Zusätzlich dazu kann eine Stufenkühlung des Strömungsmediums in der Pumpe beziehungsweise im Kompressor stattfinden, die unter dem Begriff inter cooling oder interstage cooling bekannt ist.

Sofern die Kühlung mit einer Vorrichtung erfolgt, in der ein Kühlwasser verwendet wird, ist das Ziel, das Strömungsmedium so weit abzukühlen, dass die Temperatur des Strömungsmediums möglichst nahe an die Temperatur des Kühlmediums gelangt.

Ein Vorteil der Erfindung ist, dass durch die Stoffeigenschaften von CO₂ der Thermosiphon-Effekt verstärkt wird, wenn das erfindungsgemäße System in einem geothermischen Kraftwerk eingesetzt wird.

In einer vorteilhaften Weiterbildung ist die Kühleinheit als Wärmetauscher ausgebildet. Eine weitere Bezeichnung für die Kühleinheit wäre Subcooler. Die Kühlung sollte vorteilhafter Weise derart ausgebildet sein, dass die Temperaturreduzierung des Strömungsmediums nach der Kondensation 5 K beträgt. Die Temperaturreduzierung kann auch höher oder niedriger als 5 K betragen.

In einer weiteren vorteilhaften Weiterbildung ist die weitere Kühleinheit als Wärmetauscher ausgebildet. Eine weitere Bezeichnung für die weitere Kühleinheit wäre Desuperheater.

Die Strömungsmaschine ist als Dampfturbine oder CO₂-Expander ausgebildet beziehungsweise kann als Dampfturbine oder CO₂-Expander bezeichnet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der Zeichnung näher erläutert werden.

Ein Ausführungsbeispiele der Erfindung werden nachfolgend anhand der Zeichnungen beschrieben. Diese sollen das Ausführungsbeispiel nicht maßgeblich darstellen, vielmehr sind die Zeichnungen, wo zur Erläuterung dienlich, in schematisierter und/oder leicht verzerrter Form ausgeführt. Im Hinblick auf Ergänzungen der in den Zeichnungen unmittelbar erkennbaren Lehren wird auf den einschlägigen Stand der Technik verwiesen.

Gleiche Bauteile oder Komponenten oder Bauteile oder Komponenten mit gleicher Funktion sind dabei mit gleichen Bezugszeichen gekennzeichnet.

Es zeigen
- Figur 1: einen Kreislauf gemäß dem Stand der Technik.
- Figur 2: einen erfindungsgemäßen Kreislauf.
- Figur 3: eine erfindungsgemäße Anordnung.
- Figur 4: eine Darstellung eines T S- Diagramms.

Die Figur 1 zeigt einen herkömmlichen Kreislauf (1) der bereits weiter oben beschrieben wurde.

Die Figur 2 zeigt einen erfindungsgemäßen Kreislauf 1. Der Unterschied zwischen dem in Figur 1 gezeigten Kreislauf und dem in Figur 2 gezeigten erfindungsgemäßen Kreislauf 1 ist folgender: Zwischen dem Kondensator 4 und der Pumpe 3 ist eine Kühleinheit 7 angeordnet. Der Kondensator 4 wird mit Kühlwasser 8 betrieben, an dem das Strömungsmedium kondensiert. Das Kühlwasser 8 strömt durch Rohre 9 in einem Kondensatorgehäuse 10.

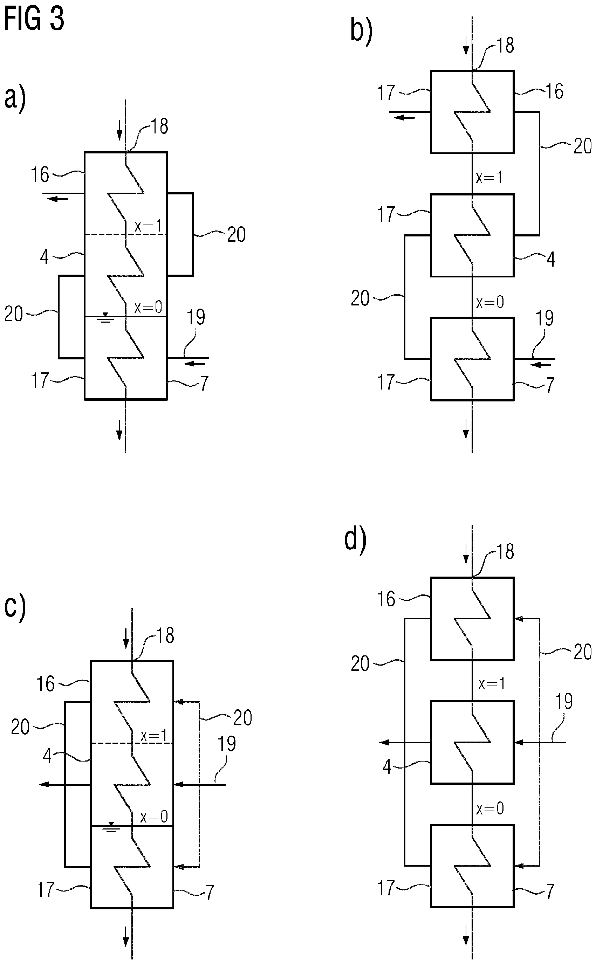

Die Kühleinheit 7 ist dazu ausgebildet, das flüssige Strömungsmedium weiter abzukühlen. In einer Ausführungsform wird das flüssige Strömungsmedium mit Kühlwasser 8 betrieben. Eine detaillierte Beschreibung der Kühlanordnung 7 erfolgt in der Beschreibung zu Figur 3.

Das Strömungsmedium ist CO₂ insbesondere sCO₂.

Der in der Figur 2 gezeigte Kreislauf kann in einer geothermischen Anwendung eingesetzt werden. Dazu wird in die Erzeuger 5 kein separates Bauteil eingesetzt, sondern die in tiefen Schichten der Erde vorhandene Erdwärme ausgenutzt. An einer ersten Stelle 11 im Kreislauf 1, der vor dem ursprünglichen Erzeuger 5 liegt, wird eine Leitung 12 in ein Reservoir im Erdinneren (nicht dargestellt) ausgebildet. Das im wesentlichen kalte Strömungsmedium wird im Reservoir durch Erdwärme soweit erwärmt, dass das Strömungsmedium einen Phasenwechsel vom flüssigen Zustand in einen gasförmigen Zustand durchführt. Anschließend gelangt das gasförmige Strömungsmedium über eine Zuleitung 13 wieder in den auf der Erdoberfläche befindlichen Kreislauf, wobei das Strömungsmedium zur Dampfturbine 6 geführt wird. Obwohl durch die Dampfturbine 6 als Ausführungsform einer Strömungsmaschine streng genommen nicht mit Dampf sondern mit CO₂, insbesondere sCO₂ betrieben wird, wird hier von Dampfturbine 6 oder CO₂-Expander gesprochen. Die Dampfturbine 6 oder der CO₂-Expander wandelt die thermische Energie des Strömungsmediums in mechanische Energie, wodurch ein Generator angetrieben werden kann, der wiederum elektrische Energie erzeugt.

Mit der erfindungsgemäßen Anordnung ist es möglich, die Temperatur des flüssigen Strömungsmediums mit Hilfe der Kühleinheit 7 um ca. 5°C abzukühlen. Dadurch stellt sich ein stärkerer Naturumlauf, der als Thermosiphon-Effekt bezeichnet wird, welcher durch eine größere Differenz aus der mittleren Dichte der Injektionsbohrung 14 und der Produktionsbohrung (15) charakterisiert wird.

Der stärkere Thermosiphon-Effekt führt dazu, dass bei gleichbleibendem zirkulierenden Massenstrom die Kompressionsarbeit verringert oder bei gleichbleibender Leistungsaufnahme der Pumpe 3 ein größerer Massenstrom gefördert wird. Somit wird eine Steigerung der Nettoleistung erzielt.

Die mögliche Leistungssteigerung, mit anderen Worten der Net Power Increase (hier für Frischwasserkühlung) ist in Abhängigkeit von der Kühlwassertemperatur beziehungsweise der resultierenden Kondensationstemperatur und der Reservoirtiefe aufgetragen. Je geringer die Differenz aus der Kondensationstemperatur und der kritischen Temperatur ist, desto größer ist der Leistungsanstieg durch eine Unterkühleinrichtung, wie die Kühleinheit 7. Die Dichte des Strömungsmediums erhöht sich durch die Unterkühlung. Eine Steigerung der Dichte auf der Injektionsseite (Injektionsbohrung 14) führt zu einem stärkeren Naturumlauf des Strömungsmediums beziehungsweise zur Substitution von Pumpenleistung.

Je geringer die Reservoirtiefe ist, desto größer ist der Leistungsanstieg durch die Kühleinheit 7. Bei Reservoiren geringer Tiefe ist der Thermosiphon-Effekt aufgrund des Reservoirdrucks und der Reservoirtemperatur schwächer als bei Reseroiren größerer Tiefe. Wird für beide Reservoire durch das Kühlen des flüssigen Strömungsmediums der Thermosiphon-Effekt um den gleichen absoluten Betrag verbessert, hat dies somit bei Reservoiren geringerer Tiefe eine stärkere Auswirkung auf den relativen Nettoleistungsgewinn.

Für nicht geothermisch geheizte sCO₂-Kreisläufe ist eine Kühlung des Strömungsmediums mit der Kühleinheit 7 vorteilhaft. In einem solchen Kreislauf 1 wird die Verdichtung des Mediums vor der Wärmezufuhr nicht auf Grund der geodätischen Höhendifferenz erzielt, sondern mit Hilfe eines Kompressors beziehungsweise einer Pumpe durch Verdichtungsarbeit. Auch in diesem Fall gilt, je stärker das Medium am Kompressor- beziehungsweise am Pumpeneintritt unterkühlt ist, desto dichter sind die Isobaren im T-s-Diagramm beziehungsweise im h-s-Diagramm für CO₂, das bedeutet es ist eine geringere Verdichtungsarbeit bei Druckerhöhung nötig.

Die Figur 3 zeigt verschiedene Varianten a), b), c) und d) der Kühlvorrichtung zum Abkühlen des flüssigen Strömungsmediums.

In der Variante gemäß a) ist die Kühleinheit 7, der Kondensator 4 und eine weitere Kühleinheit 16 in einem Aggregat, d.h. in einem Gehäuse 17 angeordnet. Die weitere Kühleinheit 16 ist dazu ausgebildet, um vor dem Eintritt des gasförmigen Strömungsmediums in den Kondensator 4 dieses noch weiter abzukühlen. Daher ist die weitere Kühlungseinheit 16 vor dem Kondensator 4 angeordnet (In Figur 2 nicht gezeigt). Die weitere Kühlungseinheit 16 und die Kühlungseinheit 7 sind als Wärmetauscher ausgebildet.

Am Eingang 18 strömt das Strömungsmedium durch das Gehäuse 17. Kühlwasser 19 strömt in Kühlwasserrohren 20 durch das Gehäuse 17. Das kalte Kühlwasser durchläuft in Flussrichtung zunächst die Kühleinheit 7, danach den Kondensator 4 und anschließend die weitere Kühleinheit 16, die auch als Enthitzer bezeichnet werden kann. Somit stellt die Variante a) sozusagen eine Serienschaltung dar. Der Kondensatabfluss ist so geregelt, dass sich ausreichend Wärmetauscherrohre unterhalb des Flüssigkeitspegels befinden, so dass das flüssige Strömungsmedium unterkühlt wird. In jedem der drei Kühlteile stellt sich ein Kreuzstrom ein. X=0 stellt die Siedelinie dar. Die Kühleinheit 7 wird in einer Gegenstrom Anordnung ausgebildet.

Die Variante b) ist mit der Variante a) insofern vergleichbar, dass das Kühlwasser in Serie durch die einzelnen Komponenten (Kühleinheit 7, Kondensator 4 und weitere Kühleinheit 16) geführt wird. Der Unterschied der Variante b) zur Variante a) ist, dass die Komponenten in separaten Aggregaten beziehungsweise Gehäusen im Gegenstromstromprinzip angeordnet sind.

Die Variante c) ist mit der Variante a) insofern vergleichbar, dass die einzelnen Komponenten (Kühleinheit 7, Kondensator 4 und weitere Kühleinheit 16) in einem Aggregat beziehungsweise einem Gehäuse 17 angeordnet sind. Der Unterschied der Variante c) zu der Variante a) ist, dass das Kühlmedium parallel alle drei Komponenten durchströmt. Daher sind unterschiedliche Aufwärmspannen der Teilströme möglich. In jedem der drei Kühlteile stellt sich ein Kreuzstrom ein. Dieser kann durch geeignete Leitvorrichtungen in eine Gegenstromanordnung überführt werden.

Die Variante d) ist mit der Variante b) insofern vergleichbar, dass die einzelnen Komponenten (Kühleinheit 7, Kondensator 4 und weitere Kühleinheit 16) in separaten Aggregaten beziehungsweise Gehäusen angeordnet sind. Der Unterschied zur Variante d) zu der Variante b) besteht darin, dass das Kühlmedium parallel alle drei Komponenten durchströmt. Die Kühlung erfolgt im Gegenstromprinzip.

Bei allen Varianten a), b), c) und d) wird das Ziel verfolgt, die Temperatur des Strömungsmediums möglichst dicht an die Temperatur des Kühlmediums abzukühlen.

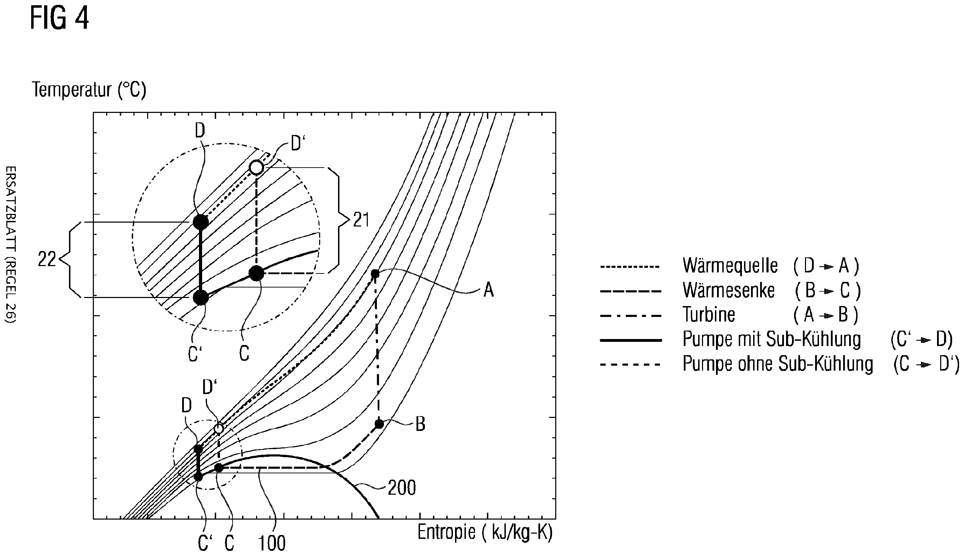

Die Figur 4 zeigt ein T-S-Diagramm für den erfindungsgemäßen Kreislauf, wobei in dem Diagramm ein Vergleich gezeigt wird zu einem herkömmlichen Kreislauf.

Die in dem Diagramm aufgeführten Punkte A, B, C, C', D beziehen sich auf die in Figur 2 dargestellten Punkte. So liegt der Punkt A vor dem Eintritt des Strömungsmediums in die Dampfturbine 6. Der Punkt B liegt hinter der Dampfturbine 6. Der Punkt C befindet sich hinter dem Kondensator 4. Der Punkt C' stellt die Situation dar, wenn eine erfindungsgemäße Kühleinheit 7 im Kreislauf angeordnet ist. Der Punkt D liegt zwischen der Pumpe 3 und dem Erzeuger 5.

Als Startpunkt kann der Punkt A gewählt werden. Vom Punkt A bis Punkt B wird das Strömungsmedium in der Dampfturbine entspannt, die Temperatur sinkt dabei bis zum Punkt B. Vom Punkt B bis zum Punkt C findet eine Kühlung des gasförmigen Strömungsmediums in der weiteren Kühlungseinheit 14 statt und anschließend eine Kondensation im Kondensator 4. Die Kondensation erfolgt isotherm bis zu dem Schnittpunkt der Linien 100 und 200. Ohne erfindungsgemäße Kühleinheit 7 würde der Kreislauf an dem Punkt C zum Punkt D (nach der Pumpe 3) führen. Mit der erfindungsgemäßen Kühleinheit 7 wird die Temperatur des Strömungsmediums entlang einer entsprechenden Isobaren noch weiter gesenkt bis zum Punkt C'. Die Pumpe 3 muss ausgehend vom Punkt C' weniger Pumpleistung 22 aufbringen als vom Punkt C zum D'. Die Pumpleistung 21 vom Punkt C zum Punkt D' ist größer als die Pumpleistung 22 vom Punkt C' zum Punkt D.

Durch die Abkühlung vom Punkt C auf den Punkt C' wird die Dichte des Strömungsmediums erhöht und die Kompressibilität verringert. Daher sind die Pumpleistungen 21 und 22 unterschiedlich.

## Patentansprüche

1. System umfassend
eine Pumpe (3) zum Befördern eines Strömungsmediums, wobei das Strömungsmedium Kohlendioxid ist,
eine Anordnung (5) zum Umwandeln des Strömungsmediums von einem flüssigen in einen gasförmigen Zustand,
eine Strömungsmaschine (6) zum Umwandeln der thermischen Energie des Strömungsmediums in mechanische Energie,
einen Kondensator (4) zum Kondensieren des gasförmigen Strömungsmediums in einen flüssigen Zustand, ferner umfassend
eine Kühlungseinheit (7) zum Abkühlen des flüssigen Strömungsmediums,
dadurch gekennzeichnent, dass
die Anordnung (5) ein Reservoir in einer geodätischen Erdschicht darstellt, wobei durch Erdwärme das im Reservoir angeordnete Strömungsmedium vom flüssigen in den gasförmigen Zustand umgewandelt wird.

2. System nach Anspruch 1,
wobei die Kühlungseinheit (7) als Wärmetauscher ausgebildet ist.

3. System nach Anspruch 1 oder 2,
wobei der Kondensator (4) mit der Pumpe (3) strömungstechnisch verbunden ist und die Kühlungseinheit (7) zwischen dem Kondensator (4) und der Pumpe (3) angeordnet ist.

4. System nach einem der vorhergehenden Ansprüche,
wobei die Strömungsmaschine (6) als Dampfturbine oder CO₂-Expander ausgebildet ist.

5. System nach einem der vorhergehenden Ansprüche,
wobei die Strömungsmaschine (6) mit dem Kondensator (4) strömungstechnisch verbunden ist und zwischen dem Kondensator (4) und der Strömungsmaschine (6) eine weitere Kühlungseinheit angeordnet ist, wobei in der weiteren Kühlungseinheit das gasförmige Strömungsmedium abgekühlt wird.

6. System nach Anspruch 5,
wobei die weitere Kühlungseinheit als Wärmetauscher ausgebildet ist.

7. System nach einem der vorhergehenden Ansprüche,
wobei die Kühlungseinheit (7), der Kondensator (4) und die weitere Kühlungseinheit in einem Gehäuse (17) angeordnet sind.

8. System nach einem der Ansprüche 4, 5, 6 oder 7,
wobei ein Kühlmedium zunächst durch die Kühlungseinheit (7), dann durch den Kondensator (4) und anschließend durch die weitere Kühlungseinheit strömt.

9. System nach einem der Ansprüche 4, 5, 6 oder 7,
wobei ein Kühlmedium parallel durch die Kühlungseinheit (7), den Kondensator (4) und die weitere Kühlungseinheit strömt.

10. System nach einem der Ansprüche 1 bis 6,
wobei die Kühlungseinheit (7), der Kondensator (4) und die weitere Kühlungseinheit in getrennten Gehäusen angeordnet sind.

11. System nach Anspruch 10,
wobei ein Kühlmedium zunächst durch die Kühlungseinheit (7), dann durch den Kondensator (4) und anschließend durch die weitere Kühlungseinheit strömt.

12. System nach Anspruch 10, wobei ein Kühlmedium parallel durch die Kühlungseinheit (7), den Kondensator (4) und die weitere Kühlungseinheit strömt.

13. Verfahren zum Betreiben eines Systems ausgebildet nach einem der Ansprüche 1 bis 12, bei dem ein Strömungsmedium im flüssigen Zustand mit einer Pumpe (3) zu einer Anordnung (5) befördert wird, wobei in der Anordnung (5) das Strömungsmedium vom flüssigen in einen gasförmigen Zustand umgewandelt wird, wobei das gasförmige Strömungsmedium in eine Strömungsmaschine (6) geführt wird, wo die thermische Energie des Strömungsmediums in mechanische Energie umgewandelt wird,
wobei nach der Strömungsmaschine (6) das Strömungsmedium in einem Kondensator (4) wieder in den flüssigen Zustand umgewandelt wird, wobei nach dem Kondensator (4) die Temperatur des Strömungsmediums mit einer Kühlungseinheit (7) verringert wird bevor das Strömungsmedium wieder zur Pumpe (3) geführt wird,
**dadurch gekennzeichnet, dass**
das Strömungsmedium nach der Pumpe (3) in ein Reservoir in der Erde geleitet wird und durch Erdwärme derart erwärmt wird, dass das Strömungsmedium einen Phasenwechsel von flüssig nach gasförmig durchführt und anschließend das gasförmige Strömungsmedium aus der Erde zu Strömungsmaschine (6) geleitet wird.

14. Verfahren nach Anspruch 13,
wobei das Strömungsmedium bevor es in den Kondensator (4) strömt in einer weiteren Kühlungseinheit gekühlt wird.

## Claims

1. System comprising
a pump (3) for conveying a flow medium, where the flow medium is carbon dioxide,
an arrangement (5) for converting the flow medium from a liquid state to a gaseous state,
a flow machine (6) for converting the thermal energy of the flow medium to mechanical energy,
a condenser (4) for condensing the gaseous flow medium to a liquid state,
further comprising
a cooling unit (7) for cooling the liquid flow medium, **characterized in that**
the arrangement (5) is a reservoir in a geodetic stratum, wherein geothermal energy converts the flow medium disposed in the reservoir from the liquid state to the gaseous state.

2. System according to Claim 1,
wherein the cooling unit (7) takes the form of a heat exchanger.

3. System according to Claim 1 or 2,
wherein the condenser (4) is connected to the pump (3) for flow purposes and the cooling unit (7) is disposed between the condenser (4) and the pump (3).

4. System according to any of the preceding claims,
wherein the flow machine (6) is designed as a steam turbine or CO₂ expander.

5. System according to any of the preceding claims,
wherein the flow machine (6) is connected to the condenser (4) for flow purposes and a further cooling unit is disposed between the condenser (4) and the flow machine (6), wherein the gaseous flow medium is cooled down in the further cooling unit.

6. System according to Claim 5,
wherein the further cooling unit is designed as a heat exchanger.

7. System according to any of the preceding claims,
wherein the cooling unit (7), the condenser (4) and the further cooling unit are disposed in a housing (17).

8. System according to any of Claims 4, 5, 6 and 7,
wherein a cooling medium flows first through the cooling unit (7), then through the condenser (4) and subsequently through the further cooling unit.

9. System according to any of Claims 4, 5, 6 and 7,
wherein a cooling medium flows in parallel through the cooling unit (7), the condenser (4) and the further cooling unit.

10. System according to any of Claims 1 to 6,
wherein the cooling unit (7), the condenser (4) and the further cooling unit are disposed in separate housings.

11. System according to Claim 10,
wherein a cooling medium flows first through the cooling unit (7), then through the condenser (4) and subsequently through the further cooling unit.

12. System according to Claim 10,
wherein a cooling medium flows in parallel through the cooling unit (7), the condenser (4) and the further cooling unit.

13. Method of operating a system designed according to any of Claims 1 to 12,
in which a flow medium in the liquid state is conveyed with a pump (3) to an arrangement (5), wherein the flow medium is converted from a liquid state to a gaseous state in the arrangement (5), wherein the gaseous flow medium is guided into a flow machine (6), where the thermal energy of the flow medium is converted to mechanical energy,
wherein, downstream of the flow machine (6), the flow medium is converted back to the liquid state in a condenser (4), wherein, downstream of the condenser (4), the temperature of the flow medium is reduced with a cooling unit (7) before the flow medium is guided back to the pump (3),
**characterized in that**
the flow medium, downstream of the pump (3), is guided into a reservoir in the ground and is heated by geothermal heat such that the flow medium undergoes a phase change from liquid to gaseous and then the gaseous flow medium is guided from the ground to flow machine (6).

14. Method according to Claim 13,
wherein the flow medium, before it flows into the condenser (4), is cooled in a further cooling unit.

## Revendications

1. Système comprenant
une pompe (3) pour véhiculer un fluide en écoulement, le fluide en écoulement étant du dioxyde de carbone,
un agencement (5) pour faire passer le fluide en écoulement de l'état liquide à l'état gazeux,
une turbomachine (6) pour transformer l'énergie thermique du fluide en écoulement en énergie mécanique,
un condenseur (4) pour condenser le fluide en écoulement gazeux en un état liquide,
comprenant en outre
un groupe (7) de refroidissement pour refroidir le fluide en écoulement liquide,
**caractérisé en ce que**
l'agencement (5) représente un réservoir dans une couche terrestre géodésique, dans lequel, par la chaleur de la terre, le fluide en écoulement dans le réservoir passe de l'état liquide à l'état gazeux.

2. Système suivant la revendication 1,
dans lequel le groupe (7) de refroidissement est constitué sous la forme d'un échangeur de chaleur.

3. Système suivant la revendication 1 ou 2,
dans lequel le condenseur (4) communique fluidiquement avec la pompe (3) et le groupe (7) de refroidissement est monté entre le condenseur (4) et la pompe (3).

4. Système suivant l'une des revendications précédentes,
dans lequel la turbomachine (6) est constituée en turbine à vapeur ou en détendeur de CO₂.

5. Système suivant l'une des revendications précédentes,
dans lequel la turbomachine (6) communique fluidiquement avec le condenseur (4) et un autre groupe de refroidissement est monté entre le condenseur (4) et la turbomachine (6), dans lequel le fluide en écoulement gazeux est refroidi dans l'autre groupe de refroidissement.

6. Système suivant la revendication 5,
dans lequel l'autre groupe de refroidissement est constitué sous la forme d'un échangeur de chaleur.

7. Système suivant l'une des revendications précédentes,
dans lequel le groupe (7) de refroidissement, le condenseur (4) et l'autre groupe de refroidissement sont disposés dans une enveloppe (17).

8. Système suivant l'une des revendications 4, 5, 6 ou 7,
dans lequel un fluide de refroidissement passe d'abord dans le groupe (7) de refroidissement, puis dans le condenseur (4) et ensuite dans l'autre groupe de refroidissement.

9. Système suivant l'une des revendications 4, 5, 6 ou 7,
dans lequel un fluide de refroidissement passe en parallèle dans le groupe (7) de refroidissement, le condenseur (4) et l'autre groupe de refroidissement.

10. Système suivant l'une des revendications 1 à 6,
dans lequel le groupe (7) de refroidissement, le condenseur (4) et l'autre groupe de refroidissement sont disposés dans des enveloppes distinctes.

11. Système suivant la revendication 10,
dans lequel un fluide de refroidissement passe d'abord dans le groupe (7) de refroidissement, puis dans le condenseur (4) et ensuite dans l'autre groupe de refroidissement.

12. Système suivant la revendication 10,
dans lequel un fluide de refroidissement passe en parallèle dans l'unité (7) de refroidissement, le condenseur (4) et l'autre groupe de refroidissement.

13. Procédé pour faire fonctionner un système constitué suivant l'une des revendications 1 à 12,
dans lequel on véhicule un flux d'un écoulement à l'état liquide par une pompe (3) à un agencement (5), dans lequel on fait passer, dans l'agencement (5), le fluide en écoulement de l'état liquide à l'état gazeux, dans lequel on envoie le fluide en écoulement gazeux dans une turbomachine (6), où on transforme l'énergie thermique du fluide en écoulement en énergie mécanique,
dans lequel, après la turbomachine (6), on fait passer le fluide en écoulement à nouveau à l'état liquide dans un condenseur (4), dans lequel, après le condenseur (4), on abaisse la température du fluide en écoulement par un groupe (7) de refroidissement, avant de retourner le fluide en écoulement à la pompe (3), **caractérisé**
**en ce que** l'on envoie le fluide en écoulement, après la pompe (3), dans un réservoir dans la terre et on le réchauffe par la chaleur de la terre, de manière à ce que le fluide en écoulement effectue un changement de phase de liquide à gazeux, et ensuite on envoie le fluide en écoulement gazeux de la terre à la turbomachine (6).

14. Procédé suivant la revendication 13,
dans lequel on refroidit le fluide en écoulement dans un autre groupe de refroidissement, avant qu'il ne passe dans le condenseur (4) .
